Europäisches Patentamt

European Patent Office

Office européen des brevets

(11) Veröffentlichungsnummer : **0 017 064**
**B1**

(12) # EUROPÄISCHE PATENTSCHRIFT

(45) Veröffentlichungstag der Patentschrift :
11.08.82

(51) int. Cl.³ : **C 02 F 3/08, C 02 F 3/18**

(21) Anmeldenummer : 80101387.1

(22) Anmeldetag : 17.03.80

(54) **Vorrichtung zur Belüftung von Abwässern oder Abwässerschlämmen.**

(30) Priorität : 27.03.79 DE 2911975

(43) Veröffentlichungstag der Anmeldung :
15.10.80 (Patentblatt 80/21)

(45) Bekanntmachung des Hinweises auf die Patenterteilung : 11.08.82 Patentblatt 82/32

(84) Benannte Vertragsstaaten :
AT BE CH DE FR GB IT LU NL SE

(56) Entgegenhaltungen :
EP A 0 005 553
DE A 2 303 657
DE A 2 615 465
DE A 2 638 665
DE A 2 727 991

(73) Patentinhaber : Stähler, Theo
Mühlenhof
D-6253 Hadamar-Niederzeuzheim (DE)

(72) Erfinder : Stähler, Theo
Mühlenhof
D-6253 Hadamar-Niederzeuzheim (DE)

(74) Vertreter : Röbe-Oltmanns, Georg, Dr.
Dotzheimer Strasse 61
D-6200 Wiesbaden (DE)

EP 0 017 064 B1

## Vorrichtung zur Belüftung von Abwässern oder Abwässerschlämmen

Die Erfindung betrifft eine Vorrichtung zur Belüftung von Abwässern oder Abwässerschlämmen zwecks Umsetzung von darin enthaltenen Fremdstoffen, insbesondere Schadstoffen in unschädliche Stoffe, mit einem Becken, beispielsweise einem Umsetz- oder Schlammbelüftungsbecken, und einem in diesem um seine Mittelachse drehbar angeordneten, im Füllzustand des Beckens teilweise austauchenden Hohlkörper, der durch Parallelen zur Drehachse und von dieser nach außen verlaufende Trennwände zur Bildung von nach außen hin offenen Umsetzungskammern aufweist, wobei die Trennwände auf ihrer in Drehrichtung gesehen vorderen Seite in der Eintauchstellung zumindest im äußeren Bereich nach unten gerichtet sind.

Zur Umsetzung von in Abwässern oder Abwässerschlämmen enthaltenen Schadstoffen ist es bekannt, eine Belüftung vorzunehmen, um die Schadstoffe zu oxydieren. Dabei bildet sich bei der Belüftung von Abwässern meist flockiger Schlamm, der in einem nachgeschalteten Absetzbecken vom Wasser getrennt werden kann. Erforderlichenfalls kann noch eine Denitrifikation des Wassers und des Schlammes vorgenommen werden.

Die Belüftung des Abwassers kann dabei auf verschiedene Weise erfolgen. Eine besonders wirksame Maßnahme besteht darin, periodisch ein- und austauchende Hohlkörper zu verwenden, die zur Wasser- und Luftaufnahme Öffnungen aufweisen. Mit diesen Hohlkörpern kann Luft unter die Wasseroberfläche gedrückt werden, die dort langsam aus den Hohlkörpern entweicht. Beim Auftauchen der Hohlkörper werden Wasser und Schlamm herausgehoben, die dann allmählich aus den Hohlkörpern herausrieseln. Dies bewirkt eine intensive Belüftung des Abwassers mit hohem Umsetzungswirkungsgrad.

Nach der DE-A 26 38 665 ist es bekannt, eine Vielzahl von rohrförmigen Hohlkörpern an drehbaren Radkränzen über den Umfang verteilt parallel zur Wasseroberfläche anzuordnen. Durch Drehen der Radkränze tauchen die Hohlkörper periodisch ein und wieder aus und nehmen dabei Luft in das Wasser bzw. heben Wasser und Schlamm heraus.

Diese Art Hohlkörperanordnung ist jedoch konstruktiv aufwendig. Zudem ist das Luftvolumen, das mit den Hohlkörpern unter die Wasseroberfläche befördert wird, relativ klein. In dieser Hinsicht günstiger verhält sich eine in der vorgenannten Vorveröffentlichung ebenfalls gezeigte Hohlkörperausführung, die als trommelförmiger Hohlkörper ausgebildet ist. Dieser Hohlkörper ist in dem Umsetzbecken mit seiner Mittelachse oberhalb der Wasseroberfläche drehbar aufgehängt. In dem Hohlkörper sind mehrere im wesentlichen radial nach außen und durch Parallelen zur Mittelachse verlaufende Trennwände angeordnet, die den Innenraum des Hohlkörpers in gleichgroße Kammern aufteilen. Diese Trennwände setzen sich in einem geschlossen ausgebildeten Teil der Außenwandung fort, wobei dieser Teil in Eintauchstellung nach unten gerichtet ist. Der in Drehrichtung daran anschließende Teil der Außenwandung ist bis zu der in Drehrichtung vorne liegenden Trennwand mit Durchbrechungen versehen. Beim Eintauchen bildet die Trennwand an dem nach unten gerichteten Teil der Außenwand eine Art Hohlschaufel, die Luft unter die Wasseroberfläche befördert. Diese Luft entweicht dann im Unterwasserbereich schon bald nach dem Eintauchen und sorgt dabei für eine Belüftung des außerhalb des Hohlkörpers befindlichen Abwassers. Beim Auftauchen wird in der Hohlschaufel Wasser hochgehoben, das bei weiterer Drehung aus den Durchbrechungen herausrieselt.

Der Vorteil der konstruktiven Einfachheit und des größeren mitgenommenen Luftvolumens dieser Hohlkörperausführung wird jedoch mit dem Nachteil erkauft, daß zum Drehen des Rohrkörpers eine relativ hohe Antriebsleistung erforderlich ist. Zudem ist der Umsetzungswirkungsgrad nicht befriedigend, da das in das Wasser beförderte Luftvolumen relativ schnell aus den Kammern entweicht und dann ebenso schnell an die Oberfläche gelangt. Die Sauerstoffaufnahme des Abwassers ist dann wegen der kurzen Verweilzeit entsprechend gering. Dies wirkt sich besonders dann aus, wenn — wie vorgeschlagen — in die Umsetzkammern eine Vielzahl von Scheiben als Haftflächen für einen aus Mikroorganismen bestehenden biologischen Rasen eingesetzt sind, da dieser Rasen durch die schnell entweichende Luft nur ungenügend belüftet wird.

Der Erfindung liegt die Aufgabe zugrunde, bei einer Vorrichtung der eingangs genannten Art den Hohlkörper derart zu gestalten, daß die erforderliche Antriebsleistung zum Drehen des Hohlkörpers verringert wird und ein besserer Umsetzungswirkungsgrad erzielt wird.

Diese Aufgabe wird erfindungsgemäß dadurch gelöst, daß die Trennwände auf ihren in Drehrichtung gesehen rückwärtigen Seiten in der Auftauchstellung im äußeren Bereich nach unten gerichtet sind. Diese Ausbildung der rückwärtigen Seiten der Trennwände verhindert, daß die unter die Wasseroberfläche beförderte Luft im Unterwasserbereich aus dem Hohlkörper entweicht. Während nämlich die Vorderseiten der Trennwände durch die Ausrichtung ihres äußeren Teiles, der auch ein Teil der Außenwandung des Hohlkörpers sein kann, nach unten in der Art einer Hohlschaufel eine Luftblase unter die Wasseroberfläche mitnehmen, bilden die rückwärtigen Seiten der Trennwände durch ihre entsprechende Ausrichtung eine Art Rückhalteschaufel für die während der Umdrehung von der Vorderseite der einen Trennwand zur Rückseite der in der Kammer gegenüberliegenden Trennwand wandernden Luftblase. Diese Luftblase verweilt somit wesentlich länger in der Umsetzungskammer als bei den bekannten Ausführungsformen, so daß erheblich mehr Sauerstoff im Abwasser gelöst und zudem der in den Umsetzungskammern befindliche biologische Rasen intensiv belüftet wird. Dies wird durch die Komprimierung der Luft im Unterwasserbereich und der hierdurch bewirkten besseren Löslichkeit des Sauerstoffes in Wasser noch begünstigt. Insgesamt ergibt sich hierdurch ein wesentlich verbesserter Umsetzungswirkungsgrad. Bei gleichem erforderlichen Umsetzungswirkungsgrad kann dann die Drehzahl des Hohlkörpers und damit dessen erforderliche Antriebsleistung gesenkt werden.

In gleicher Richtung wirkt auch der Umstand, daß die Luftblase im Bereich nach dem unteren Totpunkt einen in Drehrichtung unterstützend wirkenden Auftrieb erzeugt, der den entgegen der Drehrichtung wirkenden Auftrieb der Luftblase im Bereich vom Eintauchen bis zum unteren Totpunkt kompensiert. Dies war bei den bisherigen Ausführungsformen nicht der Fall, weil die Luft schon aus den Umsetzkammern entwichen war, bevor sie in Drehrichtung wirken konnte. Die Antriebsleistung zur Überwindung der entgegen der Drehrichtung wirkenden Auftriebskraft entfällt somit.

Dabei ist es nicht notwendig, daß die vorderen und die rückwärtigen Seiten der Trennwände in der Eintauch- bzw. Austauchstellung genau nach unten gerichtet sind. Es reicht aus, wenn die Trennwände bzw. deren äußerer Teil auch schräg nach unten zeigen. Wesentlich ist nur, daß die beabsichtigte Schaufelwirkung in der Weise eintritt, daß beim Eintauchen eine Luftblase mit unter die Wasseroberfläche befördert wird und diese dann am Entweichen aus dem Hohlkörper zumindest im wesentlichen gehindert wird.

In Ausbildung der Erfindung ist vorgesehen, daß der Hohlkörper mit im wesentlichen radial nach außen gerichteten Trennwänden versehen ist, die sich an ihren äußeren Enden beidseits in zumindest annähernd in Umfangsrichtung verlaufenden Abdeckstegen unter Freilassung von Schlitzöffnungen fortsetzen. Diese Ausbildung des Hohlkörpers zeichnet sich durch konstruktive Einfachheit und weiterhin dadurch aus, daß ein großes Luftvolumen unter die Wasseroberfläche befördert wird. Dabei kann es zweckmäßig sein, wenn jeweils einer der beiden Abdeckstege zur Bildung der Schlitzöffnung verkürzt ausgebildet ist, wobei dies vorzugsweise der in Drehrichtung gesehen jeweils vordere Abdecksteg jeder Umsetzungskammer sein sollte.

Der Hohlkörper ist konstruktiv besonders einfach herzustellen, wenn die Abdeckstege eben ausgebildet sind und in der Weise verlaufen, daß der Hohlkörper ein regelmäßiges Vieleck bildet. Dabei besteht eine günstige Möglichkeit darin, den Hohlkörper in sechs Umsetzungskammern aufzuteilen und, wie die Erfindung ferner vorsieht, ihn als Zwölfeck auszubilden. Der Hohlkörper kann dann aus einfachen Platten zusammengeschweißt werden.

Nach einem weiteren Merkmal der Erfindung ist vorgeschlagen, daß in die Umsetzungskammern radial und durch Parallelen zur Drehachse verlaufende Leitbleche zur Luftführung eingesetzt sind. Diese Leitbleche sollen zweckmäßigerweise im wesentlichen auf der Winkelhalbierenden der jeweils die Umsetzungskammern bildenden Trennwände angeordnet sein. Sie verhindern, daß die beim Eintauchen im hinteren Teil der Umsetzungskammern sich bildenden Luftblasen zu früh in den vorderen Teil wandern. Mit den Leitblechen läßt sich somit eine gleichmäßige Belüftung der einzelnen Teile der Umsetzungskammern erzielen. Dabei haben sich Leitbleche, die einhalb bis dreiviertel so lang wie die Trennwände sind, als günstig erwiesen.

Im Zusammenhang mit den Leitblechen sieht die Erfindung ferner vor, daß die Drehachse als Hohlwelle ausgebildet ist, die jeweils im Bereich zwischen dem Leitblech und der in Drehrichtung gesehen vorderen Trennwand jeder Umsetzungskammer Durchbrechungen aufweist. Auf diese Weise wird auch das von der Hohlwelle umschlossene Volumen zur Umsetzung des Abwassers genutzt, wobei die Durchbrechungen nicht nur dazu dienen, das Abwasser, sondern auch einen Teil der unter die Wasseroberfläche beförderten Luftblasen in diesen Raum eindringen zu lassen. Diese Luftblasen können dann durch die jeweils obenliegenden Durchbrechungen der Hohlwelle entweichen und belüften dann auch noch das in den auftauchenden Kammern befindliche Restwasser. Dabei hat es sich als ausreichend erwiesen, die Durchbrechungen so zu bemessen, daß beim Umlauf etwa 10 % bis 20 % der in den Umsetzungskammern eingeschlossenen Luft in die Hohlwelle entweicht.

Nach einem weiteren Merkmal der Erfindung ist vorgesehen, daß das Becken dem Hohlkörper eng angepaßt ist, insbesondere als Trog mit halbkreisförmigem Boden ausgebildet ist. Diese Anpassung bietet sich hier insbesondere deshalb an, weil sich dann praktisch das gesamte Beckenvolumen in den Umsetzungskammern befindet und damit belüftet wird. Außerdem ist hierdurch die Möglichkeit gegeben, bei geringstem Raumbedarf möglichst große Flächen für das Absetzen eines biologischen Rasens zu verwirklichen. Dies kann nach der Erfindung dadurch geschehen, daß in die Umsetzungskammern senkrecht zur Drehachse radial verlaufende Absetzscheiben eingesetzt werden. Auf diesen Absetzscheiben bildet sich dann ein aus Mikroorganismen bestehender biologischer Rasen, der wesentlich zur Schadstoffbeseitigung beiträgt. Zur Vergrößerung der Oberfläche der Absetzscheiben ist es zudem zweckmäßig, diese gewellt auszubilden.

Eine weitere Maßnahme, die erforderliche Antriebsleistung für das Drehen des Hohlkörpers zu verringern, besteht darin, den Hohlkörper so anzuordnen, daß er im Füllzustand des Beckens etwa zu Zweidrittel bis Dreiviertel seiner Höhe eintaucht. Auf diese Weise wird nicht mehr so viel Abwasser und Schlamm aus der Wasseroberfläche herausgehoben, was die hierfür notwendige Hebeleistung vermindert.

Schließlich ist gemäß der Erfindung vorgesehen, daß der Hohlkörper durch senkrecht zur Drehachse radial verlaufende Trennscheiben in wenigstens zwei Sektionen aufgeteilt ist, wobei die Trennwände der Sektionen gegeneinander winkelversetzt sind. Diese Maßnahme kann sich vor allem dann empfehlen, wenn die Umsetzungskammern ein relativ großes Volumen aufweisen, da ansonsten Ungleichförmigkeiten und Unwuchten entständen.

In der Zeichnung ist die Erfindung an Hand eines Ausführungsbeispieles näher veranschaulicht. Es zeigen :

Figur 1    eine Draufsicht auf ein Umsetzungsbecken,

Figur 2    einen senkrechten Querschnitt des Umsetzungsbeckens nach Linie II-II gemäß Fig. 1 und

Figur 3    eine Variante der Vorrichtung nach Fig. 2.

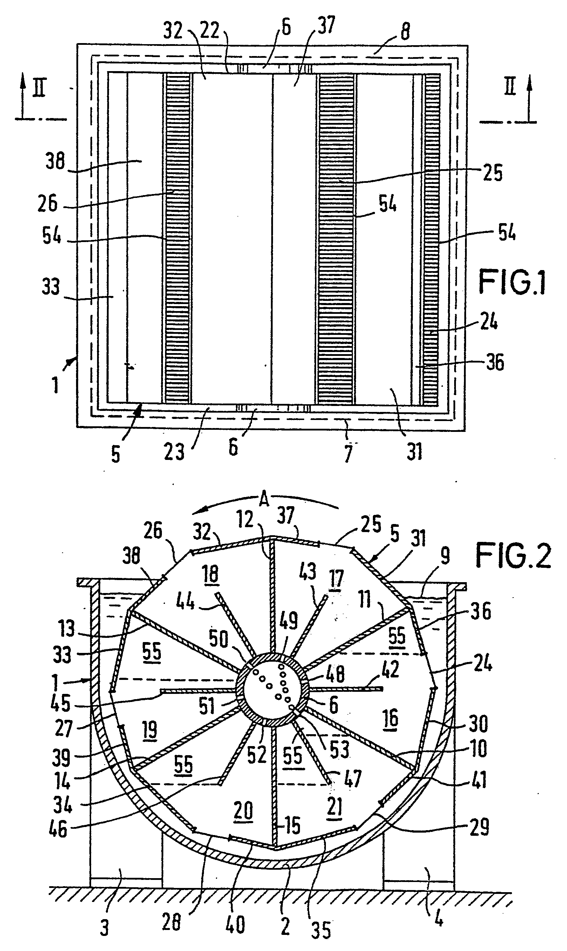

Die Figuren 1 und 2 zeigen ein trogförmiges Umsetzungsbecken 1 für eine Kläranlage, in die Abwasser nach vorheriger mechanischer Grobklärung mittels eines hier nicht näher dargestellten Zuflußrohres geleitet werden kann. Das Umsetzungsbecken 1 hat einen rechteckigen Umriß mit einem halbkreisförmigen Boden 2 und ist oben offen. Es ruht auf insgesamt vier Ständerfüßen 3, 4, von denen die Figur nur zwei zeigt.

In das Umsetzungsbecken 1 ist ein trommelförmiger, im Querschnitt zwölfeckiger Hohlkörper 5 derart eingesetzt, daß ein relativ geringer Abstand zur Innenwandung des Umsetzungsbeckens 1 verbleibt. Der Hohlkörper 5 ist über eine als Hohlwelle ausgebildete Drehachse 6 in den Seitenwänden 7, 8 des Umsetzungsbeckens 1 gelagert und wird über einen hier nicht näher dargestellten Motor in Richtung des Pfeiles A angetrieben. Im Füllzustand 9 ragt der Hohlkörper 5 etwa zu einem Viertel bis zu einem Drittel seines Durchmessers aus dem Abwasser heraus.

Wie insbesondere Figur 2 erkennen läßt, ist der Hohlkörper 5 durch von der Drehachse 6 radial nach außen und durch Parallelen zu dieser verlaufende, im gleichen Winkelabstand zueinander angeordnete Trennwände 10-15 in sechs Umsetzungskammern 16-21 aufgeteilt. Diese Umsetzungskammern 16-21 sind durch Abdeckscheiden 22, 23 seitlich geschlossen.

Jede Umsetzungskammer 16-21 weist einen über die gesamte Länge des Hohlkörpers 5 gehende Schlitzöffnung 24-29 auf, die einen Abwasser- und Luftaustausch gestatten. Diese Schlitzöffnungen 24-29 werden dadurch gebildet, daß sich die Trennwände 10-15 jeweils in annähernd in Umfangsrichtung verlaufenden Abdeckstege 30-41 nach beiden Seiten hin fortsetzen. Dadurch, daß die in Drehrichtung gesehen jeweils vorderen Abdeckstege 36-41 jeder Umsetzungskammer 16-21 gegenüber den anderen Abdeckstegen 30-35 verkürzt ausgebildet sind, sind die Schlitzöffnungen 24-29 etwas in Drehrichtung aus der Winkelhalbierenden jeder Umsetzungskammer 16-21 versetzt.

In die Umsetzungskammern 16-21 sind auf der Winkelhalbierenden liegende und von der Drehachse 6 ausgehende Leitbleche 42-47 angeordnet, die der Führung der beim Eintauchen der jeweiligen Umsetzungskammer 16-21 mitgenommenen Luft dienen. Zwischen den Leitblechen 42-47 und der jeweils in Drehrichtung gesehen vorderen Trennwand 10-15 weist die Drehachse 6 Durchbrechungen 48-53 auf, die ein Eindringen des Abwassers und in bestimmten Stellungen auch der Luft in die Drehachse 6 gestatten.

In die Umsetzungskammern 16-21 sind dicht an dicht senkrecht zur Drehachse stehende Absetzscheiben 54 angeordnet, die eine gewellte Oberfläche aufweisen. Sie bilden den Haftgrund für das Absetzen eines biologischen Rasens zur biochemischen Umwandlung der im Abwasser enthaltenen Schadstoffe. Durch die trommelartige Ausbildung des Hohlkörpers 5 und den geringen Abstand zur Innenwandung des Umsetzungsbeckens 1 lassen sich bei geringen Außenabmessungen sehr große Absetzflächen für die Bildung des biologischen Rasens unterbringen.

Bei einer Umdrehung des Hohlkörpers 5 wird in der jeweils eintauchenden Umsetzungskammer 16-21 eine relativ große Luftblase mit unter die Wasseroberfläche genommen, weil die jeweils in Drehrichtung gesehen vorderen Seiten der Trennwände 10-15 mit deren Fortsetzungen durch die sich in Drehrichtung anschließenden Abdeckstege 30-35 eine Art Hohlschaufel bilden, in der die Luftblase 55 festgehalten wird. Im weiteren Verlauf der Drehung verhindern die Leitbleche 42-47 zunächst ein Wandern der Luftblase 55 in den in Drehrichtung gesehen vorderen Teil der Umsetzungskammern 16-21, so daß deren jeweils hinterer Teil gut belüftet wird.

Erst im Bereich des unteren Totpunktes teilt sich die Luftblase 55 auf, wobei ein Teil in den jeweils vorderen Teil der Umsetzungskammern 16-21 gelangt. Von diesem Teil können durch die Durchbrechungen 48-53 etwa 10 % bis 20 % in den von der Drehachse 6 eingeschlossenen Hohlraum gelangen, so daß auch das dort befindliche Abwasser belüftet wird. Diese Luft kann dann über die jeweils obenliegenden Durchbrechungen 48-53 in die im Auftauchzustand befindlichen Umsetzungskammern 16-21 entweichen und belüften dort das Restwasser.

Im Bereich nach dem unteren Totpunkt entwickelt die Luftblase 55 eine in Drehrichtung unterstützend wirkende Auftriebskraft, die praktisch vollständig die in der ersten Hälfte in umgekehrter Richtung wirkende Auftriebskraft kompensiert. Die Antriebsleistung, die bisher für das Mitnehmen der Luft unter die Wasseroberfläche erforderlich war, ist somit bei der erfindungsgemäßen Ausbildungsform nicht mehr erforderlich, wodurch sich eine erhebliche Einsparung ergibt.

Im weiteren Verlauf der Drehung gelangt die Luftblase 55 ganz in den vorderen Bereich der Umsetzungskammern 16-21, wo sie bis zum Auftauchen durch den in Drehrichtung gesehen vorderen Abdecksteg 36-41 jeder Umsetzungskammer 16-21 am Entweichen gehindert wird. Auf diese Weise bleibt die unterstützende Auftriebswirkung bis zuletzt erhalten. Außerdem wird auch der vordere Bereich der Umsetzungskammer 16-21 intensiv belüftet. Dabei wird die Belüftungswirkung zudem durch die Tatsache gefördert, daß die Luft während des gesamten Umlaufes unter Wasser komprimiert wird, wodurch sich deren Löslichkeit in Wasser verbessert.

Insgesamt gesehen zeichnet sich der Hohlkörper 5 durch die besondere Ausbildung seiner Trennwände 10-15 bzw. deren Fortsetzungen in Form der Abdeckstege 30-41 durch einen besonders hohen Umsetzungswirkungsgrad aus, weil eine optimale Belüftung des Abwassers wie auch des biologischen Rasens gewährleistet und ein Maximum an Haftfläche für diesen Rasen verwirklichbar ist. Unter Zugrundelegung eines gleichen Umsetzungswirkungsgrades ist die erforderliche Antriebsleistung wesentlich geringer als bei den bisher bekannten Ausführungsformen. Durch das Festhalten der Luftblase in den Umsetzungskammern 16-21 während der gesamten Tauchphase kompensieren sich die von der mitgenommenen Luftblase bewirkten Auftriebskräfte gegenseitig, was ebenfalls zu einer wesentlichen Verringerung der erforderlichen Leistung führt.

Die erfindungsgemäße Ausbildung der Vorrichtung ist nicht nur auf die Anwendung als Umsetzbecken beschränkt, sondern kann selbstverständlich auch als Schlammbelüftungsbecken benutzt werden, beispielsweise um den bei der Klärung anfallenden Schlamm in ein in der Natur ablagerbares Produkt umzuwandeln.

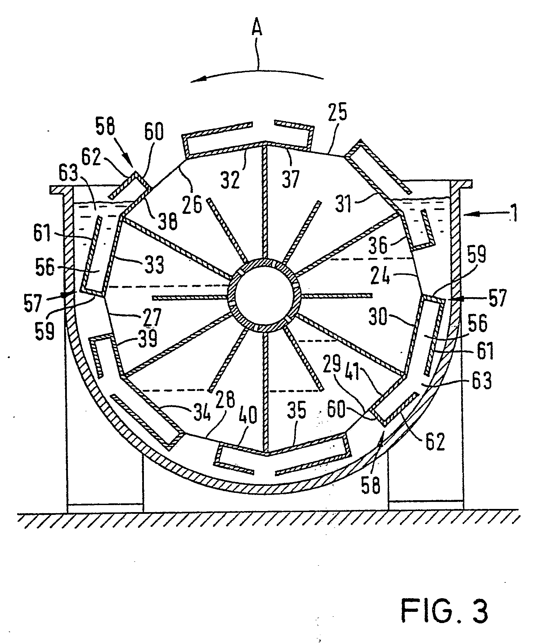

In Fig. 3 ist eine weitere bevorzugte Ausführungsform in Abwandlung der Vorrichtung nach Fig. 2 dargestellt.

Der Belüftungswirkungsgrad der Vorrichtung, wie sie in Fig. 2 dargestellt ist, kann noch dadurch verbessert werden, daß an der Außenseite der Abdeckstege zwischen den Schlitzöffnungen nach außen hin offene Zusatzkammern angeordnet sind, deren auf die Drehrichtung bezogen vorlaufende, durch Parallelen zur Drehachse laufende Begrenzungswände in Auftauchstellung im äußeren Bereich nach unten gerichtet sind, und deren auf die Drehrichtung bezogen nachlaufende durch Parallelen zur Drehachse laufende Begrenzungswände in der Eintauchstellung im äußeren Bereich nach unten gerichtet sind. Diese durch Parallelen zur Drehachse laufende Begrenzungswände bestehen zweckmäßigerweise aus im wesentlichen axial verlaufenden Wandabschnitten, an die sich im wesentlichen in Umfangsrichtung erstreckende Wandabschnitte anschließen, wobei die Endkanten der im wesentlichen in Umfangsrichtung verlaufenden Wandabschnitte jeder Zusatzkammer einen axialen Schlitz begrenzen.

Diese Maßnahme bedeutet, daß auf der Mantelfläche des rotierenden Hohlkörpers, insoweit diese geschlossen und nicht durch die Schlitzöffnungen in Anspruch genommen ist, weitere Umsetzungskammern angeordnet sind, die im wesentlichen in gleicher Weise wirken wie die Hauptkammern, jedoch im Verhältnis zu diesen eine im allgemeinen geringere radiale Erstreckung aufweisen.

Während die von den Hauptumsetzungskammern mitgenommenen Luftvolumina bei der Bewegung der Kammern durch den unteren Teil des Troges immer dazu neigen, zur Hohlwelle hin aufzusteigen, weisen die Zusatzkammern den Vorteil auf, daß durch sie Luftmengen bis unmittelbar an den Boden des Troges mitgenommen werden können, die teilweise dort entweichen, wodurch gewährleistet wird, daß auch das unterste, im Trog enthaltene Abwasser belüftet wird. Dadurch wird der Sauerstoffeintrag insgesamt verbessert. Auch bieten die Zusatzkammern zusätzliche Oberflächen für Entstehen eines biologischen Rasens.

In dem in Fig. 3 dargestellten Ausführungsbeispiel sind die Zusatzkammern 56 jeweils auf einem breiten Abdecksteg 30-35 und einem schmalen Abdecksteg 36-41 der Hauptkammern angeordnet, so daß zwischen den Zusatzkammern 56 lediglich die Schlitzöffnungen 24-29 der Hauptkammern freibleiben. Jede der Zusatzkammern besteht aus einer in Drehrichtung A des Hohlkörpers gesehen vorlaufenden, durch Parallelen zur Drehachse laufenden Begrenzungswand 57 und einer nachlaufenden durch Parallelen zur Drehachse laufenden Begrenzungswand 58 sowie aus seitlichen Stirnwänden, die in der Zeichnung nicht dargestellt sind. Die Bodenflächen der Zusatzkammern werden durch die Abdeckstege 30-41 gebildet. Jede der vorlaufenden Begrenzungswände 57 besteht aus einem im wesentlichen radial verlaufenden Wandabschnitt 59 und aus einem entgegen der Drehrichtung sich an den radialen Abschnitt 59 anschließenden, im wesentlichen in Umfangsrichtung verlaufenden Wandabschnitt 61. Entsprechend besteht die nachlaufende Begrenzungswand 58 aus einem im wesentlichen radialen Wandabschnitt 60 und aus einem an diesen sich in Drehrichtung anschließenden, im wesentlichen in Umfangsrichtung verlaufenden Wandabschnitt 62. Die sich im wesentlichen in Umfangsrichtung erstreckenden Wandabschnitte 61 und 62 begrenzen zwischen sich einen axialen Schlitz 63, der in seiner Wirkungsweise im wesentlichen den Schlitzöffnungen 24-29 der Hauptkammern entspricht.

In der speziellen Ausführungsform ist der axiale Schlitz 63 so gelegt, daß er sich in etwa im Bereich des Übergangsknickes zwischen einem schmalen Abdecksteg 36-41 und einem breiten Abdecksteg 30-35 befindet. Die sich im wesentlichen in Umfangsrichtung erstreckenden Wandabschnitte 61 und 62 sind als flache Bleche ausgeführt, welche zu den Abdeckstegen der Hauptkammern im wesentlichen parallel verlaufen.

Beim Eintauchen in die Flüssigkeitsoberfläche nehmen die nachlaufenden Begrenzungswände 58 ein Luftvolumen mit, welches nahezu bis zum Erreichen des unteren Totpunktes bei der Drehbewegung im nachlaufenden Teil der Zusatzkammern 56 gefangen bleibt. Bei Überschreiten des unteren Totpunktes tritt die mitgenommene Luft langsam in den vorlaufenden Teil der Zusatzkammer über, wobei jedoch ein Teil durch die axialen Schlitze 63 in den umgebenden Abwasserarm austritt. Der bei der Auftauchbewegung der Zusatzkammern hinter der vorlaufenden Begrenzungswand 57 gefangengehaltene Luftanteil bewirkt auch bei den Zusatzkammern einen Auftrieb, durch den ein zu starkes Anwachsen der Antriebsleistung vermieden wird. Beim Austauchen aus der Flüssigkeitsoberfläche nimmt die nachlaufende Begrenzungswand 58 ein Wasservolumen mit, das bei Erreichen des oberen Totpunktes zum Teil aus der Zusatzkammer herausläuft und dabei mit der Umgebungsluft in Berührung gebracht wird, zum Teil aber auch in den vorlaufenden Teil der Zusatzkammer übertritt und in dieser Weise ebenfalls den Drehantrieb des Hohlkörpers unterstützt.

Das Austreten von Luft aus der Zusatzkammer 56 im Bereich des unteren Totpunktes sowie das Austreten von Wasser aus der Zusatzkammer im Bereich des oberen Totpunktes wird vorteilhafterweise dadurch begünstigt, daß die seitlichen Stirnwände der Zusatzkammern im Bereich der axialen Schlitze einen Ausschnitt aufweisen, der sich bis auf den Grund der Zusatzkammer hin erstrecken kann. Dadurch wird im Bereich des unteren Totpunktes einerseits mehr Luft in das im Unterteil des Troges befindliche Abwasser hinein abgegeben, während im Bereich des oberen Totpunktes eine größere Wassermenge durch die Umgebungsluft hindurch in den Trog zurückkrieselt. Ein gezieltes Entweichenlassen von Luft bzw. Wasser aus den Zusatzkammern kann außer durch die genannten seitlichen Ausschnitte in den Stirnwänden der Zusatzkammern auch durch anderweitig angeordnete Perforationen in den Begrenzungswänden der Zusatzkammern erreicht werden. Die Anordnung und Größe solcher Durchtrittsöffnungen hängt davon ab, wieviel Luft bzw. Wasser und an welcher Stelle der Drehbewegung aus den Zusatzkammern austreten soll, um einen optimalen Belüftungseffekt zu erreichen. Die günstigste Anordnung hängt weiterhin auch vom Füllstand des Troges ab und läßt sich im einzelnen durch den mit der Sache betrauten Fachmann leicht ermitteln.

Die am Umfang des Hohlkörpers angeordneten Zusatzkammern können auch abweichend von der in Fig. 3 wiedergegebenen Ausführungsform ausgebildet sein, insofern sie den erfindungsgemäßen Zweck erfüllen, zusätzliche Luft im wesentlichen bis zum Boden des Troges in das Abwasser einzutragen und andererseits Abwasser über den Abwasserspiegel anzuheben, um es zusätzlich mit der Umgebungsluft in Berührung zu bringen.

## Ansprüche

1. Vorrichtung zur Belüftung von Abwässern oder Abwasserschlämmen zwecks Umsetzung von darin enthaltenen Fremd-, insbesondere Schadstoffen in unschädliche Stoffe, mit einem Becken, beispielsweise einem Umsetz- oder Schlammbelüftungsbecken, und einem in diesem um seine Mittelachse drehbar angeordneten, im Füllzustand des Beckens teilweise austauchenden Hohlkörper, der durch Parallelen zur Drehachse und von dieser nach außen verlaufende Trennwände zur Bildung von nach außen hin offenen Umsetzungskammern aufweist, wobei die Trennwände auf ihrer in Drehrichtung gesehen vorderen Seite in der Eintauchstellung im äußeren Bereich nach unten gerichtet sind, dadurch gekennzeichnet, daß die Trennwände (10-15) auf ihren in Drehrichtung gesehen rückwärtigen Seiten in der Auftauchstellung im äußeren Bereich (36-41) nach unten gerichtet sind.

2. Vorrichtung nach Anspruch 1, dadurch gekennzeichnet, daß der Hohlkörper (5) mit im wesentlichen radial nach außen gerichteten Trennwänden (10-15) versehen ist, die sich an ihren äußeren Enden beidseits in zumindest annähernd in Umfangsrichtung verlaufenden Abdeckstegen (30-41) unter Freilassung von Schlitzöffnungen (24-29) fortsetzen.

3. Vorrichtung nach Anspruch 2, dadurch gekennzeichnet, daß jeweils einer der beiden Abdeckstege (36-41) zur Bildung der Schlitzöffnungen (24-29) verkürzt ausgebildet ist.

4. Vorrichtung nach Anspruch 3, dadurch gekennzeichnet, daß der in Drehrichtung gesehen jeweils vordere Abdecksteg (36-41) jeder Umsetzungskammer (16-21) verkürzt ist.

5. Vorrichtung nach einem der Ansprüche 2 bis 4, dadurch gekennzeichnet, daß die Abdeckstege (30-41) eben ausgebildet sind und in der Weise verlaufen, daß der Hohlkörper (5) ein regelmäßiges Vieleck bildet.

6. Vorrichtung nach einem der Ansprüche 2 bis 5, dadurch gekennzeichnet, daß der Hohlkörper (5) in sechs Umsetzungskammern (16-21) aufgeteilt ist.

7. Vorrichtung nach Anspruch 5 und 6, dadurch gekennzeichnet, daß der Hohlkörper (5) als Zwölfeck ausgebildet ist.

8. Vorrichtung nach einem der Ansprüche 1 bis 7, dadurch gekennzeichnet, daß in die Umsetzungskammern (16-21) radial und durch Parallelen zur Drehachse (6) verlaufende Leitbleche (42-47) zur Luftführung eingesetzt sind.

9. Vorrichtung nach Anspruch 8, dadurch gekennzeichnet, daß die Leitbleche (42-47) im wesentlichen auf der Winkelhalbierenden der jeweils die Umtzungskammern (16-21) bildenden Trennwände (10-15) angeordnet sind.

10. Vorrichtung nach Anspruch 8 oder 9, dadurch gekennzeichnet, daß die Leitbleche (42-47) 1/2 bis 3/4 so lang wie die Trennwände (10-15) sind.

11. Vorrichtung nach einem der Ansprüche 8 bis 10, dadurch gekennzeichnet, daß die Drehachse (6) als Hohlwelle ausgebildet ist, die jeweils im Bereich zwischen dem Leitblech (42-47) und der in Drehrichtung gesehen vorderen Trennwand (10-15) jeder Umsetzungskammer (16-21) Durchbrechungen (48-53) aufweist.

12. Vorrichtung nach Anspruch 11, dadurch gekennzeichnet, daß die Durchbrechungen (48-53) so bemessen sind, daß beim Umlauf etwa 10 % bis 20 % der in den Umsetzungskammern (16-21) eingeschlossenen Luft in die Hohlwelle (6) entweicht.

13. Vorrichtung nach einem der Ansprüche 1 bis 12, dadurch gekennzeichnet, daß das Becken (1) dem Hohlkörper (5) eng angepaßt ist, insbesondere als Trog mit halbkreisförmigem Boden (2) ausgebildet ist.

14. Vorrichtung nach einem der Ansprüche 1 bis 13, dadurch gekennzeichnet, daß in die Umsetzungskammern (16-21) senkrecht zur Drehachse (6) radial verlaufende Absetzscheiben (54) zur Bildung eines biologischen Rasens eingesetzt sind.

15. Vorrichtung nach Anspruch 14, dadurch gekennzeichnet, daß die Absetzscheiben (54) eine gewellte Oberfläche aufweisen.

16. Vorrichtung nach einem der Ansprüche 1 bis 15, dadurch gekennzeichnet, daß der Hohlkörper (5) im Füllzustand des Beckens (1) etwa Zweidrittel bis Dreiviertel seiner Höhe eintaucht.

17. Vorrichtung nach einem der Ansprüche 1 bis 16, dadurch gekennzeichnet, daß der Hohlkörper (5) durch senkrecht zur Drehachse radial verlaufenden Trennscheiben in wenigstens zwei Sektionen aufgeteilt ist, wobei die Trennwände der Sektionen gegeneinander winkelversetzt sind.

18. Vorrichtung nach einem der Ansprüche 2 bis 17, dadurch gekennzeichnet, daß an der Außenseite der Abdeckstege (30-41) zwischen den Schlitzöffnungen (24-29) nach außenhin offene Zusatzkammern (56) angeordnet sind, deren auf die Drehrichtung bezogen vorlaufende, durch Parallelen zur Drehachse laufende Begrenzungswände (57) in Auftauchstellung im äußeren Bereich (61) nach unten gerichtet sind, und deren auf die Drehrichtung bezogen nachlaufende, durch Parallelen zur Drehachse laufende Begrenzungswände (58) in der Eintauchstellung im äußeren Bereich (62) nach unten gerichtet sind.

19. Vorrichtung nach Anspruch 18, dadurch gekennzeichnet, daß die durch Parallelen zur Drehachse laufende Begrenzungswände (57, 58) aus im wesentlichen radial verlaufenden Wandabschnitten (59, 60) bestehen, an die sich im wesentlichen in Umfangsrichtung erstreckende Wandabschnitte (61, 62) anschließen, wobei die Endkanten der im wesentlichen in Umfangsrichtung verlaufenden Wandabschnitte (61, 62) jeder Zusatzkammer (56) einen axialen Schlitz (63) begrenzen.

20. Vorrichtung nach Anspruch 19, dadurch gekennzeichnet, daß die stirnseitigen Begrenzungswände jeder Zusatzkammer (56) im Bereich des axialen Schlitzes (63) einen Ausschnitt aufweisen.

**Claims**

1. Aeration apparatus for sewages or sewage sludges for decomposing foreign substances, particularly pollutants, contained therein into innocuous substances, with a basin, e.g. a decomposition basin or sludge aeration basin, and with a hollow body arranged in the latter rotatably about its central axis and partly emerging in the full state of the basin, which hollow body has partition walls extending through parallels to the axis of rotation and outwards from the latter to form decomposition chambers open towards the exterior, whilst the partition walls are oriented downwards in the outer region at the immersion position on their front side considered in the direction of rotation, characterised in that the partition walls (10-15) are oriented downwards in the outer region (36-41) at the emergent position on their rear sides considered in the direction of rotation.

2. Apparatus according to Claim 1, characterised in that the hollow body (5) is provided with partition walls (10-15) oriented substantially radially outwards, which are prolonged at their outer ends on both sides in masking pieces (30-41) oriented at least approximately in the peripheral direction, leaving slit apertures (24-29).

3. Apparatus according to Claim 2, characterised in that in each case one of the two masking pieces (36-41) is of shortened construction in order to form the slit apertures (24-29).

4. Apparatus according to Claim 3, characterised in that the front masking piece (36-41), considered in the direction of rotation in each case, of each decomposition chamber (16-21) is shortened.

5. Apparatus according to any of Claims 2 to 4, characterised in that the masking pieces (30-41) are of plane construction and are oriented so that the hollow body (5) forms a regular polygon.

6. Apparatus according to any of Claims 2 to 5, characterised in that the hollow body (5) is divided into six decomposition chambers (16-21).

7. Apparatus according to Claims 5 and 6, characterised in that the hollow body (5) is constructed as a dodecahedron.

8. Apparatus according to any of Claims 1 to 7, characterised in that fins (42-47) extending radially and through parallels to the axis of rotation (6) are inserted into the decomposition chambers (16-21) for the air supply.

9. Apparatus according to Claim 8, characterised in that the fins (42-47) are arranged substantially on the angle bisectors of the partition walls (10-15) respectively forming the decomposition chambers (16-21).

10. Apparatus according to Claim 8 or 9, characterised in that the fins (42-47) are 1/2 to 3/4 as long as the partition walls (10-15).

11. Apparatus according to any of Claims 8 to 10, characterised in that the axis of rotation (6) is constructed as a hollow shaft which exhibits perforations (48-53) in each case in the region between the fin (42-47) and the front partition wall (10-15), considered in the direction of rotation, of each decomposition chamber (16-21).

12. Apparatus according to Claim 11, characterised in that the perforations (48-53) are dimensioned so that during revolution approximately 10 % to 20 % of the air enclosed in the decomposition chambers (16-21) escapes into the hollow shaft (6).

13. Apparatus according to any of Claims 1 to 12, characterised in that the basin (1) is closely adapted to the hollow body (5), particularly is constructed as a through with a semicircular bottom (2).

14. Apparatus according to any of Claims 1 to 13, characterised in that sedimentation plates (54) extending radially at right angles to the axis of rotation (6) are inserted into the decomposition chambers (16-21) in order to form a biological slime.

15. Apparatus according to Claim 14, characterised in that the sedimentation plates (54) exhibit a corrugated surface.

16. Apparatus according to any of Claims 1 to 15, characterised in that the hollow body (5) immerses approximately as to two-thirds to three quarters of its height in the full state of the basin (1).

17. Apparatus according to any of Claims 1 to 16, characterised in that the hollow body (5) is divided by separator plates oriented radially at right angles to the axis of rotation into at least two sections, whilst the partition walls of the sections are mutually angularly staggered.

18. Apparatus according to any of Claims 2 to 17, characterised in that additional chambers (56) open outwards are arranged on the outside of the masking pieces (30-41) between the slit apertures (24-29), and their leading boundary walls (57), referred to the direction of rotation, which pass through parallels to the axis of rotation, are oriented downwards in the outer region (61) in the emerged position, and their trailing boundary walls (58), referred to the direction of rotation, which pass through parallels to the axis of rotation, are oriented downwards in the outer region (62) in the immersed position.

19. Apparatus according to Claim 18, characterised in that the boundary walls (57, 58) which pass through parallels to the axis of rotation consist of substantially radially oriented wall sections (59, 60) which are adjoined by wall sections (61, 62) extending substantially in the peripheral direction, whilst the end edges of the wall sections (61, 62) oriented substantially in the peripheral direction of each additional chamber (56) delimit an axial slit (63).

20. Apparatus according to Claim 19, characterised in that the end face boundary walls of each additional chamber (56) exhibit a hole in the region of the axial slit (63).

## Revendications

1. Dispositif pour l'aération d'eaux usées ou de boues d'eaux usées dans le but de convertir les matières étrangères qu'elles contiennent, notamment les matières nocives en matière inoffensives, avec un bassin, par exemple un bassin de conversion ou d'aération de boues, et un corps creux disposé pour tourner autour de son axe dans le bassin, émergeant partiellement lorsque ce bassin est à l'état rempli, comportant des cloisons passant par des parallèles à l'axe de rotation et s'étendant vers l'extérieur à partir de cet axe pour former des chambres de conversion ouvertes vers l'extérieur, les cloisons étant, par leur partie avant, vue dans le sens de rotation, dirigées vers le bas dans la position immergée, au moins dans le domaine extérieur, dispositif caractérisé en ce que les cloisons (10 à 15) sont, par leurs côtés arrière vus dans le sens de rotation dirigés vers le bas dans la position de plongée, dans le domaine extérieur (36 à 41).

2. Dispositif selon la revendication 1, caractérisé en ce que le corps creux (5) est muni de cloisons (10 à 15) dirigées de façon sensiblement radiale vers l'extérieur, ces cloisons se prolongeant de chaque côté à leurs extrémités extérieures par des voiles de recouvrement (30 à 41) s'étendant en direction périphérique ou sensiblement périphérique en ménageant des ouvertures en fentes (24 à 29).

3. Dispositif selon la revendication 2, caractérisé en ce que, chaque fois, l'un des deux voiles de recouvrement (36 à 41) est de réalisation raccourcie pour former les ouvertures en fentes (24 à 29).

4. Dispositif selon la revendication 3, caractérisé en ce que chaque voile de recouvrement avant (36 à 41), vu dans le sens de rotation, de chaque chambre de conversion (16 à 21) est de réalisation raccourcie.

5. Dispositif selon l'une quelconque des revendications 2 à 4, caractérisé en ce que les voiles de recouvrement (30 à 41) sont plans et s'étendent de façon telle que le corps creux (5) forme un polygone régulier.

6. Dispositif selon l'une quelconque des revendications 2 à 5, caractérisé en ce que le corps creux (5) est divisé en six chambres de conversion (16 à 21).

7. Dispositif selon l'une ou l'autre des revendications 5 et 6, caractérisé en ce que le corps creux (5) est réalisé sous forme de dodécagone.

8. Dispositif selon l'une quelconque des revendications 1 à 7, caractérisé en ce que des tôles directrices (42 à 47) pour le guidage de l'air sont disposées dans les chambres de conversion (16 à 21) de façon à s'étendre radialement et par des parallèles à l'axe de rotation (6).

9. Dispositif selon la revendication 8, caractérisé en ce que les tôles directrices (42 à 47) sont disposées sensiblement suivant la bissectrice de l'angle formé par les cloisons (10 à 15) constituant chacune des chambres de conversion (16 à 21).

10. Dispositif selon l'une ou l'autre des revendications 8 et 9, caractérisé en ce que les tôles directrices (42 à 47) ont une longueur comprise entre la moitié et les trois quarts de celle des cloisons (10 à 15).

11. Dispositif selon l'une quelconque des revendications 8 à 10, caractérisé en ce que l'axe de rotation (6) est réalisé en tant qu'arbre creux présentant des ouvertures (48 à 53) dans le domaine situé entre la tôle directrice (42 à 47) et la cloison avant (10 à 15), vue dans le sens de rotation, de chaque chambre de conversion (16 à 21).

12. Dispositif selon la revendication 11, caractérisé en ce que les ouvertures (48 à 53) sont dimensionnées pour que, lors de la rotation, 10 % à 20 % de l'air enfermé dans les chambres de conversion (16 à 21) s'échappe dans l'arbre creux (6).

13. Dispositif selon l'une quelconque des revendications 1 à 12, caractérisé en ce que le bassin (1) est étroitement adapté au corps creux (5), notamment en étant réalisé sous forme d'auge avec un fond (2) semi-circulaire.

14. Dispositif selon l'une quelconque des revendications 1 à 13, caractérisé en ce qu'on introduit dans les chambres de conversion (16 à 21) des disques de dépôt (54) s'étendant en direction radiale perpendiculairement à l'axe de rotation (6) pour former une culture biologique.

15. Dispositif selon la revendication 14, caractérisé en ce que les disques de dépôt (54) présentent une surface ondulée.

16. Dispositif selon l'une quelconque des revendications 1 à 15, caractérisé en ce que lorsque le bassin (1) est rempli, le corps creux (5) plonge d'une distance allant sensiblement des deux tiers aux trois quarts de sa hauteur.

17. Dispositif selon l'une quelconque des revendications 1 à 16, caractérisé en ce que le corps creux (5) est divisé en au moins deux sections par des disques séparateurs s'étendant radialement perpendiculairement à l'axe de rotation, les cloisons des sections étant décalées angulairement l'une par rapport à l'autre.

18. Dispositif selon l'une quelconque des revendications 2 à 17, caractérisé en ce que des chambres supplémentaires (56) ouvertes vers l'extérieur sont disposées sur le côté extérieur des voiles de recouvrement (30 à 41) entre les ouvertures en fentes (24 à 29), les parois de limitation (57) passant par des parallèles à l'axe de ces chambres, situées en avant par rapport au sens de rotation étant dirigées vers le bas en position d'émersion, dans le domaine extérieur (61), les parois de limitation (58) passant par des parallèles à l'axe, situées en arrière par rapport au sens de rotation, étant dirigées vers le bas en position de plongée, dans le domaine extérieur (62).

19. Dispositif selon la revendication 18, caractérisé en ce que les parois de limitation (57, 58) passant par des parallèles à l'axe sont constituées par des parties de parois (59, 60) s'étendant en direction sensiblement radiale, auxquelles se raccordent des parties de parois (61, 62) s'étendant sensiblement en direction périphérique, les arêtes d'extrémité des parties de paroi (61, 62), qui s'étendent sensiblement en direction périphérique, de chaque chambre supplémentaire (56) limitant une fente axiale (63).

20. Dispositif selon la revendication 19, caractérisé en ce que les parois de limitation frontales de chaque chambre supplémentaire (56) présentent un évidement dans le domaine de la fente axiale (63).

0 017 064

FIG.1

FIG.2

FIG. 3